# EUROPÄISCHE PATENTSCHRIFT

(11) **EP 2 137 266 B1**
(45) Veröffentlichungstag und Bekanntmachung des Hinweises auf die Patenterteilung: **10.09.2014**
(21) Anmeldenummer: 08718254.9
(22) Anmeldetag: 27.03.2008
(51) Int. Cl.: C09D 5/02, C09B 67/00, B01F 17/42, B01F 17/52

(54) **POLYETHER ENTHALTENDE DISPERGIER- UND EMULGIERHARZE**
DISPERSING AND EMULSIFYING RESINS COMPRISING POLYETHER
RÉSINE DISPERSIBLE ET ÉMULSIONNABLE CONTENANT DU POLYÉTHER

(30) Priorität: 20.04.2007 DE 102007018812
(43) Veröffentlichungstag der Anmeldung: 30.12.2009
(73) Patentinhaber: Evonik Degussa GmbH, 45128 Essen (DE)
(72) Erfinder: CAVALEIRO, Pedro, 41749 Viersen (DE); ESSELBORN, Eberhard, 45147 Essen (DE); GLÖCKNER, Patrick, 45721 Haltern Am See (DE); LOEBBUS, Mario, 45478 Muelheim an der Ruhr (DE); VEIT, Thomas, 58097 Hagen (DE)
(86) Internationale Anmeldenummer: PCT/EP2008/053604
(87) Internationale Veröffentlichungsnummer: WO 2008/128846

(56) Entgegenhaltungen:
- EP-A- 0 356 391
- EP-A- 0 555 950
- EP-A- 1 078 946
- EP-A- 1 167 452

## Beschreibung

Gegenstand der Erfindung sind neuartige Dispergierharze, deren Herstellung und deren Verwendung zur Dispergierung von Feststoffen.

Für die Dispergierung von Feststoffen (z.B. Füllstoffen, Farbstoffen oder Pigmenten) in flüssigen Medien bedient man sich in der Regel Dispergiermitteln, um eine effektive Dispergierung der Feststoffe zu erreichen, die zur Dispergierung benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Materialien die Oberfläche der zu dispergierenden Partikel und stabilisieren diese gegen eine unerwünschte Reagglomeration.

Dispergiermittel erleichtern bei der Herstellung von Farben, Lacken, Druckfarben und sonstigen Beschichtungsstoffen die Einarbeitung von Feststoffen, wie zum Beispiel Füllstoffen und Pigmenten, die als wichtige Formulierungsbestandteile das optische Erscheinungsbild und die physikalisch-chemischen Eigenschaften von derartigen Systemen wesentlich bestimmen. Für eine optimale Ausnutzung müssen diese Feststoffe zum einen gleichmäßig in den Formulierungen verteilt werden, zum anderen muß die einmal erreichte Verteilung stabilisiert werden.

Eine Vielzahl verschiedener Substanzen findet heute Verwendung als Dispergiermittel für Feststoffe. Neben sehr einfachen, niedermolekularen Verbindungen, wie z.B. Lecithin, Fettsäuren und deren Salze und Alkylphenolethoxylate, werden auch komplexere hochmolekulare Strukturen als Dispergiermittel eingesetzt. Hier sind es speziell amino- und amidofunktionelle Systeme, die breite Verwendung finden.

US-A-4 224 212, EP-B-0 208 041, WO-A-00/24503 und WO-A-01/21298 beschreiben zum Beispiel Dispergiermittel auf der Basis von Polyester-modifizierten Polyaminen. DE-B-197 32 251 beschreibt Polyaminsalze und deren Einsatz als Dispergiermittel für Pigmente und Füllstoffe.

Jedoch sind mit dem Einsatz solcher Produkte auch eine Vielzahl von Nachteilen verbunden: Beim Einsatz in Pigmentpasten sind häufig hohe Gehalte an Dispergieradditiven erforderlich; die erreichbaren Pigmentierungshöhen der Pasten sind unbefriedigend niedrig; die Stabilität der Pasten und damit deren Viskositätskonstanz ist unzureichend; Flockulation und Aggregation lassen sich nicht immer vermeiden. Vielfach mangelt es an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungsstoffen negativ beeinflusst, zudem der bei der Herstellung und Verarbeitung entstehende, unerwünschte Schaum zusätzlich stabilisiert. Auch wird - bedingt durch mangelnde Verträglichkeit der Dispergierharze in vielen Auflackgütern - vielfach in unerwünschter Weise der Glanz beeinträchtigt.

Es besteht daher ein wachsender Bedarf an Dispergiermitteln für Feststoffe, die gegenüber dem Stand der Technik weiter verbesserte Eigenschaften zeigen. Gefordert sind Dispergiermittel, die eine möglichst hohe stabilisierende Wirkung auf eine Vielzahl von unterschiedlichen Feststoffen haben.

Zum Beispiel kann mit effektiveren Dispergiermitteln die Einsatzmenge von hochpreisigen Pigmenten reduziert werden, ohne Einbußen bei der Farbstärke in Kauf nehmen zu müssen.

Weiterhin wird das Viskositätsverhalten von Pasten, Farben, Lacken, Druckfarben und sonstigen Beschichtungsstoffen, die Farbstoffe oder Feststoffe, wie z.B. Füllstoffe und/oder Pigmente, enthalten, wesentlich durch das verwendete Dispergiermittel mitbestimmt. Hier sind vor allem Dispergiermittel gefragt, die eine möglichst geringe Viskosität in den flüssigen Farben und Lacken hervorrufen und auch beibehalten, wobei ein newtonsches Viskositätsverhalten bevorzugt ist.

In der Bautenfarbenindustrie wird zudem von wässrigen, gegebenenfalls co-löserhaltigen Pigmentpasten Gebrauch gemacht, die universell in wässrigen Dispersionsfarben auf Reinacrylat-, Styrolacrylat- oder Silicatbasis als auch in unpolaren langölalkydbasierenden Malerlacken zum Abtönen eingesetzt werden.

Hierfür eignen sich insbesondere die Phosphorsäureester.

Phosphorsäureester und ihre Verwendung als Dispergiermittel sind bekannt und dem Stand der Technik zu entnehmen. So werden in der US-A-4 720 514 Phosphorsäureester einer Reihe von Alkylphenolethoxylaten beschrieben, die vorteilhaft zur Formulierung wässriger Pigmentdispersionen eingesetzt werden können. Phosphorsäureester für eine ähnliche Anwendung beschreibt EP-A-0 256 427. Auch aus der DE-A-35 42 441 sind Bisphosphorsäuremonoester von Blockcopolymerisaten und deren Salze bekannt. Auch wird deren mögliche Verwendung als Dispergiermittel und Emulgator, insbesondere zur Herstellung von Pflanzenschutzformulierungen, beschrieben. Die US-A-4 872 916 beschreibt die Verwendung von Phosphorsäureestern basierend auf Alkylenoxiden geradkettiger oder verzweigter Aliphaten als Pigmentdispergiermittel. In gleicher Weise ist in US-A-3 874 891 die Verwendung entsprechender Sulfate geschildert. In den Schriften US-A-5 130 463 und US-A-5 151 218 wird über Phosphorsäureester auf Basis hydroxyterminierter Polyadditions- bzw. Polykondensationsprodukte berichtet, die für die Herstellung hochgefüllter Polyester-Formmassen, im besonderen für SMC- und BMC-Formulierungen (SMC = sheet molding compounds; BMC = bulk molding compounds), Verwendung finden. Bifunktionelle Phosphorsäureester, hergestellt über die Mannich-Moedritzer-Reaktion, und deren Adsorptionscharakteristika auf Calciumcarbonat beschreibt J. Appl. Polm. Sci. 65, 2545 (1997). In der US-A-4 456 486 werden unter anderem saure oder neutrale Phosphorsäureester von Fettalkoholen und alkoxylierten Fettalkoholen als Behandlungsmittel für bestimmte Blaupigmente beschrieben. In ähnlicher Weise beschreibt die EP-A-0 256 427 die Verwendung von Phosphorsäureestern alkoxylierter Fettalkohole zur Herstellung von Pigmentdispersionen, die sich für wässrige Anwendungen eignen sollen. Die US-A-4 720 514 beschreibt Pigmentdispersionen hergestellt unter Verwendung von Phosphorsäureestern von Alkoxylaten unterschiedlicher Struktur. US-A-4 698 099 beschreibt Pigmentdispersionen, welche als Dispergiermittel Phosphorsäureester von monohydroxyterminierten Polyestern enthalten.

In der DE-A-39 30 687 werden Phosphorsäureester (OH)₃-nPO-(OR)ₙ und deren Salze beschrieben, die dadurch gekennzeichnet sind, dass R einen mindestens ein Ethersauerstoffatom (-O-) und mindestens eine Carbonsäuregruppierung (-COO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht von 200 bis 10000 darstellt, wobei die Wasserstoffatome der aliphatischen Gruppen teilweise durch Halogenatome ersetzt sein können, das Verhältnis der Zahl der Carbonsäureestergruppen und/oder Urethangruppen im Molekül (oder in jeder Gruppe R) im Bereich von 1:20 bis 20:1 vorliegt und n für 1 oder 2 steht. Insbesondere ist auch die Verwendung dieser Phosphorsäureester als Dispergiermittel genannt.

Auch die Verwendung solcher Phosphorsäureester zur Herstellung von Emulsionspolymerisaten ist bekannt, wobei insbesondere die gute Pigmentierbarkeit solcher vor allem auch koagulatarmer Emulsionspolymerisate hervorgehoben wird (DE-A-198 10 658, JP-A-11-246799 und WO 99/46337).

In der DE-A-198 06 964 sind besondere Phosphorsäureester beschrieben, die auf Polystyrol-Block-Polyalkylenoxid-Copolymeren basieren, welche ausgehend von einem monofunktionellen Startalkohol durch sequentielle Anlagerung von Styroloxid und einem Alkylenoxid hergestellt werden. Kennzeichnend für diese Phosphorsäureester ist unter anderem die Verwendung von wenigstens 2-Mol Styroloxid zu deren Herstellung. Gleichfalls ist die Verwendung dieser Phosphorsäureester als Dispergiermittel für Pigmente und Füllstoffe beschrieben. In der DE-A-199 40 797 ist die Verwendung nichtionischer blockcopolymerer, styroloxidhaltiger Polyalkylenoxide als schaumarme Pigmentnetzmittel beschrieben, wobei die Blockcopolymere unter anderem dadurch charakterisiert sind, dass zu ihrer Herstellung weniger als 2 Mol Styroloxid verwandt werden.

Die bekannten Phosphorsäureester haben den Nachteil, dass sie in der Regel nicht universell einsetzbar sind, da es vielfach an einer ausreichenden Kompatibilität von Dispergieradditiv und Bindemittel bzw. Dispergieradditiv und umgebendem Medium (wässrige oder lösungsmittelhaltige Formulierungen) mangelt. Auch spielt der chemische Aufbau der Phosphorsäureester eine große Rolle: In wässrigen Formulierungen werden bevorzugt nur solche Phosphorsäureester eingesetzt, die keine zusätzlichen hydrolysierbaren funktionellen Gruppen, wie Ester- oder Urethangruppen, im Molekül aufweisen. Häufig sind hohe Zusätze an Dispergieradditiven erforderlich, um das Auftreten von Agglomeraten zu unterdrücken; die erreichbaren Füllgrade sind unbefriedigend niedrig, die Stabilität der Dispersionen und damit deren Viskositätskonstanz ist oft unzureichend; Flokkulation und Aggregation lassen sich nicht immer vermeiden, so dass es zu einer sichtbaren Separation sowie zu Verlaufs- und Oberflächenstörungen kommen kann.

Anwendungen styroloxidhaltiger Blockcopolymerisate in der Lack- und Druckfarbenindustrie beheben einige dieser Nachteile. Bekannt sind unter anderem (DE-A-198 06 964) Polystyroloxid-block-polyalkylenoxid-copolymere, welche ausgehend von einem monofunktionellem Startalkohol durch sequentielle Anlagerung von wenigstens 2 Mol Styroloxid und einem Alkylenoxid und nachfolgende Phosphorylierung zu den entsprechenden Phosphorsäureestern umgesetzt werden.

Wie umfassende eigene Erkenntnisse belegen, ist diesen Produkten ein gewisser Restgehalt an freiem Styroloxid gemein. Styroloxid kann gesundheitliche Schädigungen hervorrufen. In Fortführung der Diskussion der toxikologischen und ökologischen Risiken von chemischen Produkten, ist die Entwicklung und Bereitstellung styroloxidfreier Produkte daher unabdingbar.

EP 0356 391 beschreibt epoxidgruppenhaltige Acetophenon-Formaldehyd-Harze, welche durch Umsetzung von Acetophenon mit 0,7 bis 1,4 Mol Formaldehyd pro Mol Acetophenon, gefolgt von Hydrierung und anschließender Glycidylierung des Produktes hergestellt werden.

EP 1 167 452 betrifft die Verwendung besonderer Phosphorsäureester als Emulgatoren und Dispergiermittel für Pigmente und Füllstoffe, basierend auf Polystyrolblock(b)-polyalkylenoxid-Copolymeren.

EP 1 078 946 beschreibt durch Alkoxylierung erhaltene blockcopolymere, styrenoxidhaltige Polyalkylenoxide und deren Verwendung als schaumarme Pigmentnetzmittel in wäßrigen, gegebenenfalls colöser-haltigen Pigmentpasten, wäßrigen und lösemittelarmen Lacken und Druckfarben.

EP 0 555 950 betrifft eine Dispersion eines fein verteilten Pigmentes in ein Zusammensetzung aus Wasser, einem oder mehreren Wasser-kompatiblen Harzen, einer polycyclischen Verbindung mit einer Wassersolubilisierenden Poly(C₂₋₄-alkylenoxy) kette.

Es war daher die Aufgabe der vorliegenden Erfindung, einen oder mehrere der Nachteile des Standes der Technik zu beheben. Insbesondere war es die Aufgabe der vorliegenden Erfindung, Dispergiermittel für Feststoffe bereitzustellen, die auf breiter Basis eine verbesserte Dispergierleistung zeigen und die Viskosität und das rheologische Verhalten von Formulierungen, die Feststoffe enthalten, positiv beeinflussen.

Überraschenderweise wurde nun gefunden, dass die vorgenannte Aufgabe gelöst wird durch neue Dispergierharze für Feststoffe, erhältlich durch ein Verfahren, welches die teilweise oder vollständige Umsetzung der Hydroxylgruppen von carbonylhydrierten Keton-Aldehydharzen mit einem oder mehreren Oxiranen und gegebenenfalls anschließender vollständiger oder teilweiser Veresterung mit organischen und/oder anorganischen Säuren gemäß Anspruch 1 umfasst.

Bei der erfindungsgemäßen Umsetzung von carbonylhydrierten Keton-Aldehydharzen mit einer oder mehreren Oxiranverbindungen werden Oxiranverbindungen der allgemeinen Formel (I) 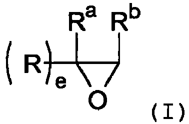 worin
- R: ein aliphatischer, cyclo-aliphatischer, aromatischer, araliphatischer Kohlenwasserstoffrest, vorzugsweise ein Alkylrest mit 1 bis 10 C-Atomen, oder Wasserstoff sein kann und
- R^{a} und R^{b}: gleich oder verschieden Wasserstoff oder Alkylreste sein können, die auch zusammen mit den beiden Oxirankohlenstoffatomen einen 5- bis 8-gliedrigen, insbesondere einen 6-gliedrigen Ring bilden können, und
- e: = 0 oder 1 sein kann, und gegebenenfalls anschließender vollständiger oder teilweiser Veresterung mit organischen und/oder anorganischen Säuren,
verwendet.

Ein weiterer Gegenstand der Erfindung sind Verbindungen der allgemeinen Formel (II)

K-(OX)_{w} (III)

worin
- K: ein carbonylhydriertes Keton-Formaldehydharz und
- X: ein Wasserstoffatom oder
- der Rest Y: = [(C₁H₂₁O)ₐ- (CₘH₂ₘO)_{b}- (CₙH₂ₙO)_{c}- (SO)_{d}-Z] ist,
- a, b, c: unabhängig voneinander Werte von 0 bis 100, vorzugsweise .5 bis 35, insbesondere 10 bis 20 sind, mit der Maßgabe, dass die Summe aus a + b + c > 0 ist,
- d: = 0 bis 10, vorzugsweise < 5, insbesondere 0 ist,
- l, m, n: unabhängig voneinander ≥ 2 bis 14, vorzugsweise 2 bis 4 sind,
- w: 2 bis 15, vorzugsweise 3 bis 12, insbesondere 4 bis 12 ist,
- SO: = Styroloxid ist,
- Z: Wasserstoff und/oder ein Rest ist ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure
mit der Maßgabe, dass der Rest Y mindestens einmal im Molekül vorhanden ist.

Bevorzugte erfindungsgemäße Verbindungen der allgemeinen Formel (II) sind solche, in denen Z der Rest der ein- und/oder zweimal veresterten Phosphorsäure ist.

Es ist dem Fachmann geläufig, dass die Verbindungen in Form eines Gemisches mit einer im Wesentlichen durch statistische Gesetze geregelten Verteilung vorliegen können. Dies gilt sowohl für die Verteilung der Oxiranreste als auch für die Säurereste und deren Veresterungsgrad, d.h. Mono-, Di-, Triester, wobei die Esterbindungen inter- und/oder intramolekular vorliegen können. In einer besonderen Ausführungsart können die Oxiranreste auch blockweise angeordnet sein.

Ein weiterer Gegenstand der Erfindung ist die Verwendung der obigen Umsetzungsprodukte, insbesondere der Verbindungen der allgemeinen Formeln (II), als Dispergiermittel für Feststoffe, insbesondere zur Herstellung von bindemittelhaltigen und bindemittelfreien Pigmentpasten, Beschichtungsstoffen, Druckfarben und Drucklacken.

Ein weiterer Gegenstande der Erfindung sind Dispersionen von Feststoffen in flüssigen Medien, enthaltend mindestens eine Verbindung der obigen Umsetzungsprodukte und/oder der Verbindungen der allgemeinen Formel (II).

Weitere Gegenstände der Erfindung sind durch die Ansprüche gekennzeichnet.

Als carbonylhydrierte Keton-Aldehydharze können bei der Umsetzung alle bekannten Harze eingesetzt werden.

Keton-Formaldehydharze sind bereits seit langem bekannt. Verfahren zur Herstellung sind z. B. beschrieben in DE 33 24 287, US 2 540 885, US 2 540 886, DE 11 55 909, DD 12 433, DE 13 00 256 und DE 12 56 898.

Zur Herstellung werden normalerweise Ketone und Formaldehyd in Gegenwart von Basen miteinander zur Reaktion gebracht.

Keton-Aldehydharze werden in Beschichtungsstoffen z. B. als filmbildende Zusatzkomponenten eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u.a. als filmbildende Funktionsfüllstoffe.

Die Carbonylgruppen der Keton-Aldehydharze unterliegen durch Bestrahlung mit z.B. Sonnenlicht klassischen Abbaureaktionen, wie z. B. vom Norrish-Typ I oder II [Laue, Plagens, Namen und Schlagwort-Reaktionen, Teubner Studienbücher, Stuttgart, 1995].

Die Verwendung nicht modifizierter Keton-Aldehyd- oder Ketonharze ist daher für qualitativ hochwertige Anwendungen z. B. im Außenbereich, bei dem hohe Beständigkeitseigenschaften insbesondere gegenüber Witterung und Hitze erforderlich sind, nicht möglich. Diese Nachteile können durch Hydrierung der Carbonylgruppen verbessert werden. Die Umwandlung der Carbonylgruppen in sekundäre Alkohole durch Hydrierung von Keton-Aldehydharzen wird seit langem praktiziert (DE 826 974, DE 870 022, JP 11-012338, US 6 222 009).

Die Herstellung carbonyl- und kernhydrierter Keton-Aldehydharze auf Basis von Ketonen, die aromatische Gruppen enthalten, ist ebenfalls möglich. Solche Harze werden in DE 33 34 631 beschrieben.

In keiner Schrift wird jedoch die Alkoxylierung carbonylhydrierter Keton-Aldehydharze beschrieben.

Erfindungsgemäß besonders bevorzugt sind carbonylhydrierte Keton-Aldehydharze auf Basis von Formaldehyd, die im Wesentlichen die Strukturelemente gemäß Formeln (III-a) bis (III-c) enthalten 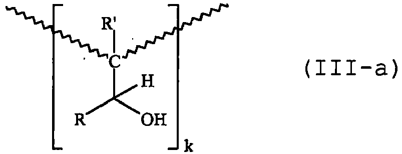 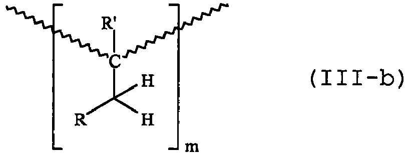 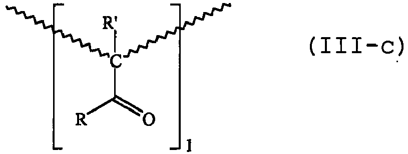 wobei
- R: ein aromatischer Kohlenwasserstoffrest mit 6 - 14 Kohlenstoffatomen oder ein (cyclo-)aliphatischer Kohlenwasserstoffrest mit 1 - 12 Kohlenstoffatomen,
- R': = H oder CH₂OH,
- k: = 2 bis 15, bevorzugt 3 bis 12, besonders bevorzugt 4 bis 12,
- m: = 0 bis 13, bevorzugt 0 bis 9,
- l: = 0 bis 2 ist,
wobei die Summe aus k + 1 + m zwischen 5 und 15 liegt und k > m ist, bevorzugt zwischen 5 und 12 liegt, die drei Strukturelemente alternierend oder statistisch verteilt sein können und wobei die Strukturelemente über CH₂-Gruppen linear und/oder über CH-Gruppen verzweigend verknüpft sind,
erhalten durch
A) die Herstellung der Grundharze durch Kondensation von mindestens einem Keton mit mindestens einem Aldehyd in Gegenwart mindestens eines basischen Katalysators und ggf. mindestens eines Phasentransferkatalysators, lösemittelfrei oder unter Verwendung eines wasser-mischbaren organischen Lösemittels,
   und anschließender
B) kontinuierlicher, halb- oder diskontinuierlicher Hydrierung der Carbonylgruppen der in A) erhaltenen Keton-Aldehydharze in der Schmelze oder in Lösung eines geeigneten Lösemittels mit Wasserstoff in Gegenwart eines Katalysators bei Drücken zwischen 50 und 350 bar, bevorzugt zwischen 100 und 300 bar, besonders bevorzugt zwischen 150 und 300 bar und Temperaturen zwischen 40 und 140 °C, bevorzugt zwischen 50 und 140 °C.

Diese Verbindungen sowie das Verfahren zu ihrer Herstellung sind Gegenstand der nicht vorveröffentlichen Patentanmeldung DE 10 2006 009 079.9 die hiermit als Referenz eingeführt wird.

Erfindungsgemäß bevorzugt sind außerdem carbonylhydrierte Keton-Aldehydharze auf Basis bi-reaktiver Ketone und Formaldehyd, die im Wesentlichen Strukturelemente gemäß Formel (IV) enthalten, 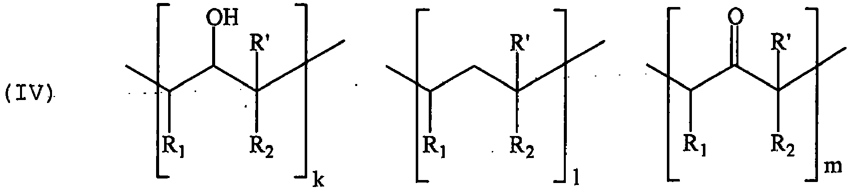 mit
- R': = H, aliphatischer Kohlenwasserstoffrest mit 1 bis 12 Kohlenstoffatomen öder CH₂OH,
- R₁, R₂: = H, aliphatischer und/oder cycloaliphatischer Kohlenwasserstoffrest mit 1 bis 18 Kohlenstoffatomen,
wobei
- R₁ und R₂: gleich oder davon verschieden oder Teil eines gemeinsamen cycloaliphatischen Ringes sein können,
- k: = 1 bis 15, bevorzugt 2 bis 12, besonders bevorzugt 3 bis 12,
- l: = 1 bis 13, bevorzugt 1 bis 9,
- m: = 0 bis 2,
wobei die Summe aus k + l + m zwischen 3 und 15, bevorzugt zwischen 4 und 12 liegt und die drei Strukturelemente alternierend oder statistisch verteilt sein können und wobei die Strukturelemente über CH₂-Gruppen linear verknüpft sein können und die Strukturelemente im Falle von R₁ und/oder R₂ = H über CH₂-Gruppen außerdem verzweigend verknüpft sein können,
erhalten durch
A) die Herstellung der Grundharze durch Kondensation von mindestens einem Keton mit mindestens einem Aldehyd in Gegenwart mindestens eines basischen Katalysators und gegebenenfalls mindestens eines Phasentransferkatalysators, lösemittelfrei oder unter Verwendung eines wassermischbaren organischen Lösemittels,
   und anschließender
B) kontinuierlicher, halb- oder diskontinuierlicher Hydrierung der Carbonylgruppen der Keton-Aldehydharze (A) in der Schmelze oder in Lösung eines geeigneten Lösemittels mit Wasserstoff in Gegenwart eines Katalysators bei Drücken zwischen 50 und 350 bar, bevorzugt zwischen 100 und 300 bar, besonders bevorzugt zwischen 150 und 300 bar und Temperaturen zwischen 40 und 140 °C, bevorzugt zwischen 50 und 140 °C.

Diese Verbindungen sowie das Verfahren zu ihrer Herstellung sind Gegenstand der nicht vorveröffentlichen Patentanmeldung DE 10 2006 009 080.2, die hiermit als Referenz eingeführt wird.

Beispiele für die Alkylenoxide sind ein oder mehrere Verbindungen ausgesucht aus der Gruppe Ethylenoxid, Propylenoxid, Butylenoxid, Styroloxid, Dodecenoxid, Tetradecenoxid, 2,3-Dimethyloxiran, Cyclopentenoxid, 1,2-Epoxypentan, 2-Isopropyloxiran, Glycidylmethylester, Glycidylisopropylester, Epichlorhydrin, 3-Methoxy-2,2-dimethyloxiran, 8-oxabicyclo[5.1.0]octan, 2-Pentyloxiran, 2-Methyl-3-phenyloxiran, 2,3-Epoxypropylbenzol, 2-(4-Fluorophenyl)oxiran, Tetrahydrofuran, sowie deren reine Enantiomerenpaare oder Enantiomerengemische.

Durch das Verhältnis von Alkylenoxiden untereinander und zu den Harzen K können Eigenschaften wie z.B. Hydrophilie/Hydrophobie, Schmelzbereich, Viskosität, Härte, usw. mitbestimmt werden. Die Regeln dazu sind dem Fachmann auf diesem Gebiet geläufig.

Ein Feststoff im Sinne der vorliegenden Erfindung kann prinzipiell jedes feste organische oder anorganische Material sein.

Beispiele solcher Feststoffe sind Pigmente, Füllstoffe, Farbstoffe, optische Aufheller, keramische Materialien, magnetische Materialien, nanodisperse Feststoffe, Metalle, Biozide, Agrochemikalien und Pharmaka, welche als Dispersionen angewendet werden.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol- und Phtalocyaninpigmente. Weitere Beispiele für organische Pigmente werden in dem Buch "W. Herbst, K. Hunger, Industrial- Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silicate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen; und Biozide, Agrochemikalien und Pharmaka, wie zum Beispiel Fungizide.

Pigmentpasten, Beschichtungsstoffe, Druckfarben und/oder Drucklacke im Sinne der vorliegenden Erfindung können verschiedenste Produkte sein. Es können zum Beispiel Füllstoffe, Pigmente und/oder Farbstoffe enthaltende Systeme sein. Als flüssiges Medium können sie organische Lösemittel und/oder Wasser enthalten, wie dies in Abhängigkeit von den verwendeten Bindemitteln als Stand der Technik bekannt ist. Weiterhin können als flüssige Medien auch Bindemittelkomponenten wie zum Beispiel Polyole angesehen werden.

Die Beschichtungsstoffe, Druckfarben und/oder Drucklacke müssen jedoch nicht notwendigerweise eine flüssige Phase enthalten, sondern können auch sogenannte Pulverlacke sein.

Ebenso können die Beschichtungsstoffe, Druckfarben und/oder Drucklacke die dem üblichen Stand der Technik entsprechende Zusatzstoffe enthalten, wie zum Beispiel Netzmittel, Verlaufshilfsmittel oder Entschäumer etc. und nach unterschiedlichen, dem Stand der Technik gemäßen Verfahren aushärten, vernetzen und/oder trocknen.

Beispiele für Beschichtungsstoffe im Sinne der vorliegenden Erfindung sind Farben, Lacke, Druckfarben und sonstige Beschichtungsstoffe, wie lösemittelhaltige Lacke und lösemittelfreie Lacke, Pulverlacke, UV-härtbare Lacke, Low-Solids, Medium-Solids, High-Solids, Automobillacke, Holzlacke, Einbrennlacke, 2K-Lacke, Metallbeschichtungsstoffe, Tonerzusammensetzungen. Weitere Beispiele für Beschichtungsstoffe werden in "Bodo Müller, Ulrich Poth, Lackformulierung und Lackrezeptur, Lehrbuch für Ausbildung und Praxis, Vincentz Verlag, Hannover (2003)" und "P.G. Garrat, Strahlenhärtung, Vincentz Verlag, Hannover (1996)" genannt.

Beispiele für Druckfarben und/oder Drucklacke im Sinne der vorliegenden Erfindung sind lösemittelbasierende Druckfarben, Flexodruckfarben, Tiefdruckfarben, Buchdruck- bzw. Hochdruckfarben, Offsetdruckfarben, Litho-Druckfarben, Druckfarben für den Verpackungsdruck, Siebdruckfarben, Drucktinten, wie Drucktinten für Tintenstrahldrucker, Ink Jet Tinte, Drucklacke, wie Überdrucklacke.

Weitere Beispiele für Druckfarben- und/oder Drucklackformulierungen werden in "E.W. Flick, Printing Ink and Overprint Varnish Formulations - Recent Developments, Noyes Publications, Park Ridge NJ, (1990)" und nachfolgende Auflagen genannt.

Die erfindungsgemäßen Dispergierharze können in Pigmentpasten, Beschichtungsstoffen, Druckfarben und/oder Drucklacken in einer Konzentration von 0,01 bis 90,0 Gew.-%, vorzugsweise von 0,5 bis 35 Gew.-% und besonders bevorzugt von 1 bis 25 Gew.-% mitverwendet werden. Gegebenenfalls können sie in Mischung mit Netz- und Dispergiermitteln des Standes der Technik eingesetzt werden.

### Ausführungsbeispiele:

Die Erfindung wird nachfolgend anhand von Ausführungsbeispielen näher erläutert.

### Edukte:

Carbonylhydrierte Keton-Aldehydharze

Die carbonylhydrierten Keton-Aldehydharze wurden wie folgt hergestellt.

Herstellung eines Grundharzes für die weitere Hydrierung auf Basis von Acetophenon und Formaldehyd

1200 g Acetophenon, 220 g Methanol, 0,3 g Benzyltributylammoniumchlorid und 360 g einer 30%igen, wässrigen Formaldehydlösung werden vorgelegt und unter Rühren homogenisiert. Sodann erfolgt unter Rühren die Zugabe von 32 g einer 25%igen, wässrigen Natronlaugelösung. Bei 80 bis 85 °C erfolgt dann unter Rühren die Zugabe von 655 g einer 30%igen, wässrigen Formaldehydlösung über 90 min. Der Rührer wird nach 5 h Rühren bei Rückflusstemperatur abgestellt und die wässrige Phase von der Harzphase separiert. Das Rohprodukt wird mit essigsaurem Wasser gewaschen, bis eine Schmelzprobe des Harzes klar erscheint. Dann wird das Harz durch Destillation getrocknet.

Es werden 1270 g eines leicht gelblichen Harzes erhalten. Das Harz ist klar und spröde und besitzt einen Schmelzpunkt von 72 °C. Die Farbzahl nach Gardner beträgt 0,8 (50%ig in Ethylacetat). Es ist z. B. in Acetaten wie z. B. Butyl- und Ethylacetat, in Aromaten wie Toluol und Xylol löslich. Es ist unlöslich in Ethanol. Der Formaldehydgehalt liegt bei 35 ppm. Dieses Produkt wird als Grundharz bezeichnet.

### Hydrierung des Grundharzes auf Basis von Acetophenon und Formaldehyd

Carbonylhydriertes Keton-Aldehydharz Nr. I:

300 g des Grundharzes werden unter Erwärmen in 700 g i-Butanol gelöst. Sodann erfolgt die Hydrierung bei 260 bar und 120 °C in einem Autoklaven (Fa. Parr) mit Katalysatorkorb, der mit 100 mL eines Raney-Typ Nickelkatalysators gefüllt ist. Nach 8 h wird die Reaktionsmischung über ein Filter aus dem Reaktor abgelassen.

### Carbonylhydriertes Keton-Aldehydharz Nr. II:

300 g des Grundharzes werden in 700 g Tetrahydrofuran (Wassergehalt ca. 7 %) gelöst. Sodann erfolgt die Hydrierung bei 260 bar und 120 °C in einem Autoklaven (Fa. Parr) mit Katalysatorkorb, der mit 100 mL eines handelsüblichen Ru-Katalysators (3 % Ru auf Aluminiumoxid) gefüllt ist. Nach 20 h wird die Reaktionsmischung über ein Filter aus dem Reaktor abgelassen.

### Carbonylhydriertes Keton-Aldehydharz Nr. III:

Das Grundharz wurde unter Erwärmen 30%ig in i-Butanol gelöst. Die Hydrierung erfolgt in einem kontinuierlich betriebenen Festbettreaktor, der mit 400 mL eines handelsüblichen, silikageträgerten Kupfer-Chrom-Kontaktes gefüllt ist. Bei 300 bar und 130 °C werden stündlich 500 mL der Reaktionsmischung von oben nach unten durch den Reaktor gefahren (Rieselfahrweise). Der Druck wird durch Nachführen von Wasserstoff konstant gehalten.

Die carbonylhydrierten Keton-Aldehydharzlösungen aus den Beispielen I bis III werden im Vakuum vom Lösemittel befreit. Man erhält die entsprechenden carbonylhydrierten Keton-Aldehydharze I-III.

Umsetzung von carbonylhydrierten Keton-Aldehydharzen mit einem oder mehreren Alkylenoxiden und gegebenenfalls vollständiger oder teilweiser Veresterung mit Phosphorsäure.

Die Herstellung der erfindungsgemäßen Polyether erfolgte analog den Angaben der DE 100 29 648. Die entstandenen modifizierten Polyether haben eine allgemeine Strukturformel

[U-(SO)ₑ(EO)_{f}(PO)_{g}(BO)ₕ]ᵢP(O)(OH)₃₋ᵢ

worin bedeuten
U = carbonylhydriertes Keton-Aldehydharz,
SO = -CH₂-CH(Ph)-O- mit Ph = Phenylrest,
EO = Ethylenoxid,
PO = Propylenoxid,
BO = Butylenoxid.

**Tabelle 1:**

| Beispiel | Carbonylhydriertes Keton-Aldehydharz Nr.: | e | f | g | h | i |
|---|---|---|---|---|---|---|
| A1 | I | 4 | 4 | 4 | 0 | 3,0 |
| A2 | II | 0 | 20 | 0 | 0 | 0,7 |
| A3 | III | 1 | 9 | 0 | 0 | 1,0 |
| A4 | I | 3 | 0 | 0 | 2 | 1,0 |
| A5 | II | 2 | 0 | 4 | 0 | 3,0 |
| A6 | III | 0 | 9 | 0 | 0 | 3,0 |
| A7 | I | 4 | 4 | 4 | 0 | 0,3 |
| A8 | II | 1 | 5 | 0 | 0 | 1,0 |
| A9 | III | 1 | 9 | 0 | 0 | 1,0 |
| A10 | I | 3 | 0 | 0 | 2 | 2,5 |
| A11 | II | 2 | 0 | 4 | 0 | 1,0 |
| A12 | III | 0 | 9 | 0 | 0 | 0,5 |
| A13 | I | 4 | 4 | 4 | 0 | 1,0 |
| A14 | II | 0 | 20 | 0 | 0 | 0,9 |
| A15 | III | 3 | 0 | 0 | 2 | 0,9 |
| A16 | II | 0 | 10 | 0 | 0 | 0,9 |
| A17 | II | 0 | 9 | 0 | 0 | 3,0 |
| A18 | III | 4 | 4 | 4 | 0 | 1,0 |
| A19 | I | 1 | 5 | 0 | 0 | 1,0 |
| A20 | II | 1 | 9 | 0 | 0 | 1,0 |
| A21 | III | 3 | 0 | 0 | 2 | 2,5 |

Dabei stellt die oben genannte Reihenfolge der monomeren Alkylenoxide keine Einschränkung hinsichtlich der resultierenden Polyetherstrukturen dar, sondern eine beispielhafte Aufzählung, wobei an dieser Stelle ausdrücklich darauf verwiesen sei, dass Polyether unter Verwendung der vorgenannten Monomeren sowohl statistisch als auch blockweise aufgebaut sein können. Dem Fachmann ist bekannt, dass der gegebenenfalls modifizierte Polyether mittels einer Phosphorylierungsreaktion hergestellt wurde und dass diese Reaktion statistisch verläuft. Der Wert i stellt das molare Verhältnis von Polyether zu Phosphatgruppen dar. Der Wert i kann zwischen 0 und 2,9 variieren.

### Anwendungstechnische Beispiele:

Als Vergleichsbeispiele wurden ein Fettsäureethoxylat B1 (Tego Dispers 740W, Fa. Tego), ein Nonylphenolethoxylat mit 9 Mol Ethylenoxid B2 (Berol 09, Fa. Akzo), entsprechendes Monophosphatderivat B3 (Berol® 733, Fa. Akzo) sowie ein mit 10 Mol E0 ethoxylierter Oleylalkohol B4 (Alkanol 010, Fa. Tego) verwendet.

Zur Überprüfung der Wirksamkeit der erfindungsgemäßen als Dispergieradditiv zu verwendenden Verbindungen sowie der Vergleichsverbindungen wurde wie folgt vorgegangen:

### Herstellung der Pigmentpasten

Zur Herstellung der Pigmentpasten wurden die jeweiligen Additive mit Wasser und gegebenenfalls Antischaummitteln gemischt und danach die Pigmente zugegeben. Die Dispergierung erfolgte nach Zugabe von Mahlkörpern (Glaskugeln 2-3mm, gleiches Volumen wie die Pigmentpaste) eine (anorg. Pigmente) beziehungsweise zwei Stunden (organische Pigmente und Ruß) in einem Skandex-Rüttler mit Luftkühlung.

### Formulierung der Blaupasten

Die Blaupasten wurden wie folgt formuliert (Angaben in Gew.-%):

| | |
|---|---|
| 45,9 | Wasser, |
| 12,2 | erfindungsgemäßen Verbindungen bzw. Vergleichverbindung (bezogen auf 100% Festkörper), |
| 1,0 | Entschäumer (Tego Foamex 830, Tego Chemie Service GmbH), |
| 40,8 | Farbstoff (Heliogenblau 7080, BASF), |
| 0,1 | Konservierungsmittel (Bodoxin® AH, Bode-Chemie). |

### Formulierung der Schwarzpasten

Die Schwarzpasten wurden wie folgt formuliert (Angaben in Gew.-%):

| | |
|---|---|
| 56,9 | Wasser, |
| 15,0 | erfindungsgemäßen Verbindungen bzw. Vergleichverbindung (bezogen auf 100% Festkörper), |
| 1,0 | Entschäumer (Tego® Foamex 830, Tego Chemie Service GmbH), |
| 0,1 | Konservierungsmittel (Bodoxin® AH, Bode-Chemie), |
| 27,0 | Pigment (Flammruß 101, Degussa). |

### Formulierung der Eisenoxidrotpasten (Angaben in Gew.-%):

| | |
|---|---|
| 25,8 | Wasser, |
| 8,1 | erfindungsgemäßen Verbindungen bzw. Vergleichverbindung (bezogen auf 100% Festkörper), |
| 0,1 | Konservierungsmittel (Bodoxin® AH, Bode-Chemie), |
| 1,0 | Entschäumer (Tego®Foamex 830, Tego Chemie Service GmbH), |
| 65,0 | Eisenoxidrot (Bayferrox 140M, Bayer). |

Die Herstellung der erfindungsgemäßen Pigmentpasten ließ sich infolge der geringeren Schaumstabilisierung in diesen Fällen mit einer geringeren Entschäumerkonzentration (0,8 statt 1,0% vornehmen).

### Prüflacke

Es wurden zwei kommerziell erhältliche Weißlacke auf Reinacrylatdispersionsbasis (Mowilith® DM771) und auf Basis eines lösemittelfreien Langölalkydes (Alkydal®F681, 75%-ig) verwandt,

**Weißlack 1 (wässrig)**

| | |
|---|---|
| Wasser | 3,8 |
| Additol® XW330 | 0,3 (Netzmittel, Vianova) |
| 2%ige wässrige Lösung von Tylose® MH2000 K | 9,4 (Verdicker, Clariant) |
| 10%ige wässrige Lösung von Calgon® N | 1,1 (Netzmittel, Henkel) |
| Mergal® K10N | 0,2(Konservierungsmittel, Allied Signal) |
| China Clay B | 2,0 |
| Micro Talc ATl | 3,8 |
| Omyacarb® GU | 16,8(Füllstoff, Omya) |
| Kronos® 2190 | 22,6 (Titandioxid, Kronos) |
| Foamex® 8030 | 0,4 (Entschäumer, Tego) |
| Mowilith® DM771 | 37,5(Acrylatdispersion, Clariant) |
| Ammoniak (25%ig) | 0,2 |
| Testbenzin | 1,1 |
| Butyldiglycolacetat | 0,8 |

**Weißlack 2 (lösemittelbasierend)**

| | |
|---|---|
| Alkydal® F681, 75%-ig | 50,0 (Langölalkyd, Bayer) |
| Bayertitan® R-KB-2 | 26,0 (Titandioxid, Kerr Mc Gee) |
| Octa Soligen® Ca. 4 | 2,0 (Trockenstoff, Borchers) |
| Bentone 34, 10%iger Aufschluss | 1,4(10 T. Bentone 34, 10 T. Tego®Dispers 700, 80T.Testbenzin) |
| K60 | 18,0 (Kristallöl) |
| Octa Soligen® Kobalt 6 | 0,3 (Borchers) |
| Octa Soligen®Zirkon 18 | 2,0 (Borchers) |
| Ascinin® R konz. | 0, 3 (Byk) |

Zur Herstellung abgetönter Lacke wurden Buntpaste und Weißlack im Verhältnis 1 g Buntpigment auf 25 g Weißpigment manuell gemischt.

### Test der Pastenstabilitäten

Zur Ermittlung der Pastenstabilitäten wurden bei zwei verschiedenen Schergefällen (20 1/s sowie 1000 1/ s) die erreichbaren Anfangsviskositäten sowie die Viskositäten nach vierwöchiger Lagerung bei 50 °C bestimmt.

**Blaupasten**

| Probe | Viskosität /Pas sofort bei 20 1/s | Viskosität /Pas sofort bei 1000 1/s | Viskosität /Pas nach 4 Wo 50°C bei 20 1/s | Viskosität /Pas nach 4 Wo 50°C bei 1000 1/s |
|---|---|---|---|---|
| A1 | 1308 | 150 | 1500 | 203 |
| A2 | 1150 | 130 | 1300 | 155 |
| A3 | 1201 | 134 | 1380 | 160 |
| A4 | 1106 | 120 | 1320 | 140 |
| A5 | 1200 | 125 | 1360 | 138 |
| A6 | 1170 | 140 | 1290 | 160 |
| A7 | 1413 | 200 | 1800 | 250 |
| B1 | 1108 | 150 | 1700 | 235 |
| B2 | 1723 | 135 | 2500 | 280 |
| B3 | 1306 | 130 | 190 | 190 |
| B4 | 2062 | 250 | 4000 | 390 |

**Schwarzpasten**

| Probe | Viskosität /Pas sofort bei 20 1/s | Viskosität /Pas sofort bei 1000 1/s | Viskosität /Pas nach 4 Wo 50°C bei 20 1/s | Viskosität /Pas nach 4 Wo 50°C bei 1000 1/s |
|---|---|---|---|---|
| A1 | 400 | 120 | 420 | 140 |
| A2 | 360 | 100 | 380 | 130 |
| A3 | 365 | 110 | 380 | 120 |
| A4 | 350 | 100 | 385 | 120 |
| A5 | 310 | 108 | 340 | 393 |
| A6 | 405 | 120 | 420 | 140 |
| A7 | 401 | 130 | 509 | 200 |
| B1 | 400 | 130 | 508 | 180 |
| B2 | 500 | 120 | 680 | 980 |
| B3 | 420 | 130 | 740 | 182 |
| B4 | nicht herstellbar | | | |

**Eisenoxidpasten**

| Probe | Viskosität /Pas sofort bei 20 1/s | Viskosität /Pas sofort bei 1000 1/s | Viskosität /Pas nach Wo 50°C bei 20 1/s | Viskosität/Pas nach 4 Wo 50°C bei 1000 1/s |
|---|---|---|---|---|
| A1 | 790 | 320 | 1000 | 395 |
| A2 | 650 | 395 | 903 | 425 |
| A3 | 630 | 320 | 870 | 370 |
| A4 | 615 | 290 | 820 | 320 |
| A5 | 707 | 408 | 900 | 440 |
| A6 | 720 | 326 | 890 | 370 |
| A7 | 1100 | 500 | 1010 | 700 |
| B1 | 1304 | 450 | Keine Stabilität | Keine Stabilität |
| B2 | 1302 | 450 | Keine Stabilität | Keine Stabilität |
| B3 | 1800 | 900 | 4000 | 1300 |
| B4 | 900 | 160 | Keine Stabilität | Keine Stabilität |

Aus dem jeweils nur geringen Viskositätsanstieg ließ sich die gute Stabilität der erfindungsgemäßen Pigmentpasten für alle untersuchten Pigmenttypen leicht erkennen, während die Vergleichsbeispiele nur in Einzelfällen die Herstellung stabiler Pigmentpräparationen ermöglichten.

### Test der Dispergiereigenschaften

Aufzug der Testformulierungen mit 200 µm Nassfilmdicke; nach 5 min Trocknung Rub-Out-Test auf 1/3 der 5 Fläche. Farbmetrische Vermessung der Aufzüge mittels eines Spektralphotometers Typ XP 68 der Fa. X-Rite.

**Dispersionslack auf Basis Mowilith® DM771/blau**

| Probe | Farbmetrische Werte | | Delta E nach Rub-Out |
|---|---|---|---|
| | L und b | | |
| A1 | 65,5 | -31,6 | 2,2 |
| A2 | 65,2 | -32,1 | 2,4 |
| A3 | 64,7 | -32,3 | 1,9 |
| A4 | 65,0 | -32,0 | 2,0 |
| A5 | 64,6 | -32,5 | 1,8 |
| A6 | 65,3 | -31,9 | 1,9 |
| A7 | 65,4 | -31,0 | 3,5 |
| B1 | 63,7 | -33,9 | 0,9 |
| B2 | 65,6 | -30,6 | 4,3 |
| B3 | 65,2 | -32,0 | 3,9 |
| B4 | 63,9 | -31,5 | 5,7 |

**Dispersionslack auf Basis Mowilith® DM771/rot**

| Probe | Farbmetrische Werte | | | Delta E nach Rub- Out |
|---|---|---|---|---|
| | L, a und b | | | |
| A1 | 75,8 | 13,3 | 4,5 | 0,4 |
| A2 | 75,9 | 13,1 | 4,3 | 0,4 |
| A3 | 75,8 | 13,4 | 4,2 | 0,5 |
| A4 | 75,5 | 13,6 | 4,5 | 0,3 |
| A3 | 75,6 | 13,5 | 4,6 | 0,4 |
| A6 | 75,7 | 13,4, | 4,5 | 0,3 |
| A7 | 74,8 | 13,2 | 4,0 | 1,3 |
| B1 | 75,0 | 13,0 | 4,1 | 0, 9 |
| B2" | 74,9 | 13,1 | 4,1 | 1,2 |
| B3 | 75,5 | 13,2 | 4,2 | 0,7 |
| B4 | 75,2 | 12,9 | 4,7 | 0,9 |

**Dispersionslack auf Basis Mowilith® DM77 1/grau**

| Probe | Farbmetrische Werte | | Delta E nach Rub-Out |
|---|---|---|---|
| | L und b | | |
| A1 | 60,3 | 4,5 | 0,3 |
| A2 | 60,4 | 4,4 | 0,2 |
| A3 | 60,4 | 4,4 | 0,3 |
| A4 | 60,6 | 4,5 | 0,3 |
| A5 | 60,5 | 4,3 | 0,3 |
| A6 | 60,2 | 4,4 | 0,1 |
| A7 | 61,1 | 4,4 | 1,4 |
| B1 | 59,1 | 4,4 | 0,5 |
| B2 | 60,3 | 4,5 | 1,2 |
| B3 | 62,3 | 4,3 | 2,4 |
| B4 | entfällt | | entfällt |

**Alkydlack auf Basis Alkydal® F681/blau**

| Probe | Farbmetrische Werte | | Delta E nach Rub- Out |
|---|---|---|---|
| | L und b | | |
| A1 | 68,0 | -29,9 | 1,5 |
| A2 | 68,2 | -29,7 | 1,5 |
| A3 | 66,7 | -30,8 | 1,5 |
| A4 | 67,3 | -29,9 | 1,5 |
| A3 | 68,0 | -29,5 | 1,5 |
| A6 | 67,8 | -30,1 | 1,5 |
| A7 | 66,5 | -28,7 | 1,5 |
| B1 | 88,0 | -4,0 | 24,7 |
| B2 | 67,5 | -29,2 | 4,2 |
| B3 | 68,8 | -28,4 | 4,1 |
| B4 | 66,3 | -28,6 | 3,1 |

**Alkydlack auf Basis Alkydal® F681/rot**

| Probe | Farbmetrische Werte | | | Delta E nach Rub- Out |
|---|---|---|---|---|
| | L, a und b | | | |
| A1 | 76,8 | 12,3 | 2,7 | 0,4 |
| A2 | 75,9 | 12,0 | 2,6 | 0,3 |
| A3 | 75,8 | 12,1 | 2,8 | 0,4 |
| A4 | 75,5 | 12,2 | 2,7 | 0,2 |
| A3 | 75,6 | 11,9 | 2,6 | 0,6 |
| A6 | 75,7 | 11,1 | 2,7 | 0,3 |
| A7 | 74,8 | 7,9 | 1,8 | 3,9 |
| B1 | 82,0 | 8,0 | 0,9 | 2,7 |
| B2 | 87,9 | 2,9 | 0,1 | 11,5 |
| B3 | 79,5 | 9,2 | 1,3 | 4,8 |
| B4 | 78,2 | 7,9 | 1,5 | 5,0 |

**Alkydlack auf Basis AlkydalF681/grau 30**

| Probe | Farbmetrische Werte | | Delta E nach Rub- Out |
|---|---|---|---|
| | L und b | | |
| A1 | 62,1 | 6,0 | 0,4 |
| A2 | 62,8 | 6,3 | 0,3 |
| A3 | 62,1 | 5,8 | 0,5 |
| A4 | 62,3 | 6,1 | 0,3 |
| A3 | 62,7 | 6,7 | 0,4 |
| A6 | 62,7 | 6,0 | 0,6 |
| A7 | 62,9 | 6,0 | 0,4 |
| B1 | 82,3 | 4,2 | 8,3 |
| B2 | 63,1 | 6,3 | 1,7 |
| B3 | 63,3 | 6,4 | 1,2 |
| B4 | 64,1 | 6,5 | 1,8 |

Zu erkennen war die erzielbare günstige Farbstärkenentwicklung sowie der in allen Fällen günstige Rub-Out-Test durch die erfindungsgemäßen Dispergieradditive.

Dies wurde insbesondere auch deutlich im Vergleich zu den Vergleichsbeispielen, die lediglich in Einzelfällen zu guten Farbstärkentwicklungen führten, Insbesondere wurde die Überlegenheit der erfindungsgemäß zu verwendenden erfindungsgemäßen Verbindungen anhand der für alle Pigmenttypen in wasserbasierenden als auch lösemittelbasierenden Systemen vorzüglichen Rub-Out-Werte Delta E deutlich.

Ein besonders hervorzuhebendes Merkmal ist auch die deutlich verbesserte Redispergierbarkeit von an- bzw. eingetrockneten Präparationsanteilen. Weiterhin besitzen sie eine sehr niedrige Antrocknungs- oder Austrocknungsneigung. Viskosität, Fließverhalten und die damit notwendigen Voraussetzungen für ausgezeichnete Dosiermöglichkeiten werden hierdurch deutlich verbessert. Die erfindungsgemäßen Pigmentpräparationen besitzen eine sehr hohe Farbkraft und Brillanz. Es lassen sich hohe Pigmentkonzentrationen erzielen. Die Pigmentkonzentrate ließen sich unter geringem Mahlaufwand herstellen, was beides mit hohen wirtschaftlichen Vorteilen verbunden ist.

### Verwendungsbeispiel zur Herstellung von Emulsions-polymerisaten

Der Emulgator A2 wurde in Wasser gelöst und mit Ammoniak auf einen pH-Wert von 9 eingestellt.

### Vorlage:

- 1,5 g: Emulgator A2,
- 250 g: Wasser,
- 36 g: Teil von Zulauf 1 (Zulauf 1: 8,5 g Emulgator A2, 200 g Wasser, 15 g Acrylamid (50%-ig in Wasser), 12,5 g Acrylsäure, 242 g Styrol, 237 g n-Butylacrylat),
- 5 g: Teil von Zulauf 2 (Zulauf 2: 2,5 g Na-Peroxodisulfat, 98 g Wasser).

Die Vorlage wurde in einem Polymerisationsgefäß, das mit einem Ankerrührer, Rückflusskühler und 2 Zulaufgefäßen ausgestattet war, in einer Stickstoffatmosphäre auf eine Temperatur von 85 °C geheizt und 15 Minuten anpolymerisiert. Dann wurde der Zulauf 1 in 2 Stunden und der Zulauf 2 in 2,5 Stunden zudosiert. Anschließend wurde noch 1 Stunde lang nachpolymerisiert. Dann wurde über ein Sieb der Maschenweite 500 µm filtriert, und der Koagulatanteil im feuchten Zustand mit < 0,1% ausgewogen. Der Feststoffgehalt der Dispersion betrug 48% bei einer Viskosität von 130 mPas.

Die Verwendung dieser erfindungsgemäßen Verbindungen zur Emulsionspolymerisation ist insbesondere dann vorteilhaft, wenn die Bindemittel zur Formulierung von Anstrichfarben verwendet werden, da diese Emulgatoren hohe Pigmentkonzentrationen in der Dispersion zulassen und das Pigmentbindevermögen des Polymeren somit groß ist, was wiederum - dem Fachmann geläufig - zu höheren Naßabriebfestigkeiten führt.

## Patentansprüche

1. Dispergierharze für Feststoffe, erhältlich durch die teilweise oder vollständige Umsetzung der Hydroxylgruppen von carbonylhydrierten Keton-Aldehydharzen mit einem oder mehreren Oxiranen und gegebenenfalls anschließender vollständiger oder teilweiser Veresterung mit organischen und/oder anorganischen Säuren, wobei beim Herstellungsprozess eine oder mehrere Oxiranverbindungen der allgemeinen Formel (I) 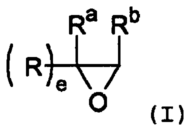 verwendet werden, worin
R ein aliphatischer, cyclo-aliphatischer, aromatischer, arali-phatischer Kohlenwasserstoffrest oder Wasserstoff ist und
R^{a} und R^{b} gleich oder unterschiedlich Wasserstoff oder Alkylreste sind, die auch zusammen mit den beiden Oxirankohlenstoffatomen einen 5- bis 8-gliedrigen Ring bilden können, und e = 0 oder 1 ist.

2. Dispergierharze nach Anspruch 1 **dadurch gekennzeichnet, dass** R ein Alkylrest mit 1 bis 10 C-Atomen ist.

3. Dispergierharze nach einem der Ansprüche 1 und 2 **dadurch gekennzeichnet, dass** R^{a} und R^{b} Alkylreste sind, die zusammen mit den beiden Oxirankohlenstoffatomen einen 6-gliedrigen Ring bilden.

4. Dispergierharze der allgemeinen Formel (II)
K-(Ox)_{w} (II)
worin
K ein carbonylhydriertes Keton-Formaldehydharz und
X ein Wasserstoffatom oder der Rest Y = [(C₁H₂₁O)ₐ-(CₘH₂ₘO)_{b}-(CₙH₂ₙO)_{c}-(SO)_{d}-Z] ist,
a, b, c unabhängig voneinander Werte von 0 bis 100 sind, mit der Maßgabe, dass die Summe aus a + b + c > 0,
d = 0 bis 10,
l, m, n unabhängig voneinander ≥ 2 bis 14,
w = Anzahl der OH-Gruppen in K und = 2 bis 15, ist,
SO = Styroloxid,
Z Wasserstoff und/oder ein Rest ist, ausgesucht aus der Gruppe der Sulfonsäuren, Schwefelsäuren, Phosphonsäuren, Phosphorsäuren, Carbonsäuren, Isocyanate, Epoxide,
mit der Maßgabe, dass der Rest Y mindestens einmal im Molekül vorhanden ist.

5. Dispergierharze nach Anspruch 4 **dadurch gekennzeichnet, dass** a, b und c unabhängig voneinander die Werte 5 bis 35 annehmen.

6. Dispergierharze nach mindestens einem der Ansprüche 4 bis 5 **dadurch gekennzeichnet, dass** d < 5 ist.

7. Dispergierharze nach mindestens einem der Ansprüche 4 bis 5 **dadurch gekennzeichnet, dass** d 0 ist.

8. Dispergierharze nach mindestens einem der Ansprüche 4 bis 7 **dadurch gekennzeichnet, dass** 1, m und n unabhängig voneinander 2 bis 4 sind.

9. Dispergierharze nach mindestens einem der Ansprüche 4 bis 8 **dadurch gekennzeichnet, dass** w 3 bis 12 ist.

10. Dispergierharze nach mindestens einem der Ansprüche 4 bis 9 **dadurch gekennzeichnet, dass** Z ausgesucht ist aus der Gruppe Phosphorsäure und (Meth)-Acrylsäure.

11. Dispergierharze nach mindestens einem der Ansprüche 4 bis 9 **dadurch gekennzeichnet, dass** Z der Rest der ein- oder zweimal veresterten Phosphorsäure ist.

12. Dispersionen von Feststoffen in flüssigen Medien enthaltend mindestens ein Dispergierharz nach mindestens einem der Ansprüche 1 bis 11.

13. Verwendung der Dispergierharze nach mindestens einem der Ansprüche 1 bis 11 als Dispergiermittel für Feststoffe.

14. Verwendung der Dispergierharze nach mindestens einem der Ansprüche 1 bis 11 zur Herstellung von bindemittelhaltigen und bindemittelfreien Pigmentpasten, Beschichtungsstoffen, Druckfarben und Drucklacken.

## Claims

1. Dispersing resins for solids, obtainable through the partial or complete reaction of the hydroxyl groups of carbonyl-hydrogenated ketone-aldehyde resins with one or more oxiranes and, if desired, subsequent complete or partial esterification with organic and/or inorganic acids, during the preparation process one or more oxirane compounds of the general formula (I) 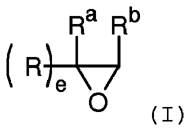 being used in which
R is an aliphatic, cycloaliphatic, aromatic or araliphatic hydrocarbon radical or hydrogen, and
R^{a} and R^{b} are alike or different and are hydrogen or alkyl radicals which may also, together with the two oxirane carbon atoms, form a 5- to 8-membered ring, and e is = 0 or 1.

2. Dispersing resins according to Claim 1, **characterized in that** R is an alkyl radical having 1 to 10 C atoms.

3. Dispersing resins according to either of Claims 1 and 2, **characterized in that** R^{a} and R^{b} are alkyl radicals which, together with the two oxirane carbon atoms, form a 6-membered ring.

4. Dispersing resins of the general formula (II)
K-(OX)_{w} (II)
in which
K is a carbonyl-hydrogenated ketone-formaldehyde resin and
X is a hydrogen atom or the radical Y = [(C₁H₂₁O)ₐ-(CₘH₂ₘO)_{b}-(CₙH₂ₙO)_{c}-(SO)_{d}-Z],
a, b and c independently of one another are values from 0 to 100, with the proviso that the sum of a + b + c is > 0,
d = 0 to 10,
l, m and n independently of one another are ≥ 2 to 14,
w = number of OH groups in K and = 2 to 15,
SO = styrene oxide, and
Z is hydrogen and/or a radical selected from the group consisting of sulfonic acids, sulfuric acids, phosphonic acids, phosphoric acids, carboxylic acids, isocyanates, and epoxides,
with the proviso that the radical Y is present at least once in the molecule.

5. Dispersing resins according to Claim 4, **characterized in that** a, b and c independently of one another adopt the values 5 to 35.

6. Dispersing resins according to at least one of Claims 4 to 5, **characterized in that** d is < 5.

7. Dispersing resins according to at least one of Claims 4 to 5, **characterized in that** d is 0.

8. Dispersing resins according to at least one of Claims 4 to 7, **characterized in that** 1, m and n independently of one another are 2 to 4.

9. Dispersing resins according to at least one of Claims 4 to 8, **characterized in that** w is 3 to 12.

10. Dispersing resins according to at least one of Claims 4 to 9, **characterized in that** Z is selected from the group consisting of phosphoric acid and (meth)acrylic acid.

11. Dispersing resins according to at least one of Claims 4 to 9, **characterized in that** Z is the radical of monoesterified or diesterified phosphoric acid.

12. Dispersions of solids in liquid media, comprising at least one dispersing resin according to at least one of Claims 1 to 11.

13. Use of the dispersing resins according to at least one of Claims 1 to 11 as dispersants for solids.

14. Use of the dispersing resins according to at least one of Claims 1 to 11 for producing binder-containing and binder-free pigment pastes, coating materials, printing inks and print varnishes.

## Revendications

1. Résines de dispersion pour matières solides, pouvant être obtenues par la réaction partielle ou totale des groupes hydroxy de résines cétone-aldéhyde hydrogénées sur le groupe carbonyle, avec un ou plusieurs oxiranes et éventuellement estérification partielle ou totale subséquente avec des acides organiques et/ou inorganiques, en utilisant dans le processus de préparation un ou plusieurs composés oxirane de formule générale (I) 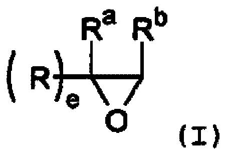 dans laquelle
R est un radical hydrocarboné aliphatique, cycloaliphatique, aromatique, araliphatique ou un atome d'hydrogène et
R^{a} et R^{b} sont identiques ou différents et représentent un atome d'hydrogène ou des radicaux alkyle qui peuvent également former ensemble avec les deux atomes de carbone de l'oxirane un cycle à 5 à 8 chaînons, et e est égal à 0 ou 1.

2. Résines de dispersion selon la revendication 1, **caractérisées en ce que** R est un radical alkyle ayant de 1 à 10 atomes de carbone.

3. Résines de dispersion selon l'une quelconque des revendications 1 et 2, **caractérisées en ce que** R^{a} et R^{b} sont des radicaux alkyle qui forment ensemble avec les deux atomes de carbone de l'oxirane un cycle à 6 chaînons.

4. Résines de dispersion de formule générale (II)
K-(OX)_{w} (II)
dans laquelle
K est une résine cétone-formaldéhyde hydrogénée sur le groupe carbonyle et
X est un atome d'hydrogène ou le radical Y = [(C₁H₂₁O)ₐ-(CₘH₂ₘO)_{b}-(CₙH₂ₙO)_{c}-(SO)_{d}-Z],
a, b, c ont chacun indépendamment des valeurs de 0 à 100, étant entendu que la somme de a + b + c est > 0,
d = 0 à 10,
l, m, n sont chacun indépendamment ≥ 2 à 14,
w = nombre des groupes OH dans K et vaut de 2 à 15,
SO = oxyde de styrène,
Z est un atome d'hydrogène et/ou un radical choisi dans le groupe des acides sulfoniques, acides sulfuriques, acides phosphoniques, acides phosphoriques, acides carboxyliques, isocyanates, époxydes,
étant entendu que le radical Y est présent au moins une fois dans la molécule.

5. Résines de dispersion selon la revendication 4, **caractérisées en ce que** a, b et c ont chacun indépendamment les valeurs de 5 à 35.

6. Résines de dispersion selon au moins l'une quelconque des revendications 4 et 5, **caractérisées en ce que** d est < 5.

7. Résines de dispersion selon au moins l'une quelconque des revendications 4 et 5, **caractérisées en ce que** d est 0.

8. Résines de dispersion selon au moins l'une quelconque des revendications 4 à 7, **caractérisées en ce que** 1, m et n représentent chacun indépendamment 2 à 4.

9. Résines de dispersion selon au moins l'une quelconque des revendications 4 à 8, **caractérisées en ce que** w vaut de 3 à 12.

10. Résines de dispersion selon au moins l'une quelconque des revendications 4 à 9, **caractérisées en ce que** Z est choisi dans le groupe constitué par l'acide phosphorique et l'acide (méth)acrylique.

11. Résines de dispersion selon au moins l'une quelconque des revendications 4 à 9, **caractérisées en ce que** Z est le radical de l'acide phosphorique une ou deux fois estérifié.

12. Dispersions de matières solides dans des milieux liquides contenant au moins une résine de dispersion selon au moins l'une quelconque des revendications 1 à 11.

13. Utilisation des résines de dispersion selon au moins l'une quelconque des revendications 1 à 11 en tant que dispersant pour matières solides.

14. Utilisation des résines de dispersion selon au moins l'une quelconque des revendications 1 à 11 dans la fabrication de pâtes de pigments, matières de revêtement, encres d'impression et laques d'impression, contenant des liants ou sans liant.
